# EUROPÄISCHE PATENTSCHRIFT

(11) **EP 3 630 544 B1**
(45) Veröffentlichungstag und Bekanntmachung des Hinweises auf die Patenterteilung: **06.03.2024**
(21) Anmeldenummer: 18724875.2
(22) Anmeldetag: 15.05.2018
(51) Int. Cl.: B60Q 1/52, B60Q 1/08, G08G 1/16, G08G 1/01, G08G 1/005, G08G 1/04

(54) **VERFAHREN ZUR ANSTEUERUNG WENIGSTENS EINER VORRICHTUNG VON EINEM KRAFTFAHRZEUG**
METHOD FOR ACTIVATING AT LEAST ONE DEVICE FROM A MOTOR VEHICLE
PROCÉDÉ POUR LA COMMANDE D'AU MOINS UN DISPOSITIF PAR UN VÉHICULE À MOTEUR

(30) Priorität: 31.05.2017 DE 102017209240
(43) Veröffentlichungstag der Anmeldung: 08.04.2020
(73) Patentinhaber: Volkswagen Aktiengesellschaft, 38440 Wolfsburg (DE)
(72) Erfinder: MAX, Stephan, 38518 Gifhorn (DE); WEISS, Kristian, 13187 Berlin (DE)
(86) Internationale Anmeldenummer: PCT/EP2018/062593
(87) Internationale Veröffentlichungsnummer: WO 2018/219640

(56) Entgegenhaltungen:
- EP-A1- 3 112 214
- WO-A1-2016/070193
- DE-A1-102015 004 551
- DE-A1-102015 010 932
- DE-A1-102015 214 760
- US-A1- 2016 318 437

## Beschreibung

Die Erfindung betrifft ein Verfahren zur Ansteuerung wenigstens einer Vorrichtung von einem Kraftfahrzeug mit den Merkmalen vom Oberbegriff des Patentanspruchs 1.

Ein Verfahren zum Steuern eines Scheinwerfers eines Fahrzeugs wird in der EP 3 112 214 A1 beschrieben. Konkret ist dort ein Verfahren zum Steuern eines Scheinwerfers eines Fahrzeugs offenbart, bei dem zunächst ein durch ein Objekt (bspw. entgegenkommendes Fahrzeug) bereitgestelltes und eine Position des Objekts repräsentierendes Fahrzeugpositionssignal eingelesen wird. Daraufhin werden die Position des Fahrzeugs und die Position des Objekts unter Verwendung des Objektpositionssignals und des Fahrzeugpositionssignals miteinander verglichen, um eine relative Position des Fahrzeugs zum Objekt zu ermitteln. In Abhängigkeit von der relativen Position des Fahrzeugs zum Objekt wird dann ein Steuersignal zum Steuern des Scheinwerfers erzeugt. Das Steuersignal dient dazu, um den Scheinwerfer abzublenden, um einen Scheinwerferstrahl vom Objekt wegzulenken oder einen solchen auf das Objekt hinzulenken. Der Schritt des Einlesens, des Vergleichens und des Erzeugens des Steuersignals wird durch eine von dem Fahrzeug getrennte Datenverarbeitungseinheit durchgeführt. Bei dem Objekt kann es sich auch um eine Person handeln, die ein Mobiltelefon mit sich trägt, mit dem Objektpositionssignale generiert und versendet werden können.

Ein Verfahren zur Fahrzeug-Fußgänger-Kommunikation ist aus der DE 10 2014 110 958 A1 bekannt geworden. Konkret wird in diesem Dokument ein Fahrzeug-Fußgänger-Kommunikationssystem beschrieben. Das System dient zur Warnung von jeweils ein Gerät des Systems nutzenden Bedienern. Dabei wird ein erstes Gerät durch einen Fußgänger mitgeführt und bedient. Ein zweites Gerät ist in einem Kraftfahrzeug installiert und durch einen Fahrer bedienbar. Das System ist dazu ausgebildet, über das erste Gerät und/oder das zweite Gerät eine Warnung an den Fahrer und/oder den Fußgänger auszugeben. Insbesondere wird eine Warnung ausgegeben, wenn auf Grund von erfassten Parametern, wie globaler Position und/oder Geschwindigkeit festgestellt wurde, dass sich der voraussichtliche Weg des Fahrzeugs und der voraussichtliche Weg des Fußgängers schneiden. Unter anderem wird beschrieben, dass die Scheinwerfer auf einen erkannten Fußgänger gerichtet werden können. Es wird auch erwähnt, die Scheinwerfer aufzublenden und zu hupen, wenn eine Ablenkung des Fußgängers erkannt wird. Ebenso können über eine Mensch-Maschine-Schnittstelle (HMI) optische und/oder akustische Warnungen an den Fahrer ausgegeben werden.

In der DE 10 2010 048 470 A1 wird ebenfalls ein Fahrzeug-Fußgänger-Kommunikationssystem offenbart. Dabei ist eine fahrzeugbasierte Vorrichtung zum Empfangen und Übertragen der globalen Positionierung des Fahrzeugs und eine fußgängerbasierte Vorrichtung zum Empfangen und Übertragen einer globalen Position des Fußgängers vorhanden. Dem Fahrzeug und/oder dem Fußgänger wird ein Alarmsignal geliefert, welches basierend auf den jeweiligen globalen Positionsdaten dem einen Verkehrsteilnehmer jeweils eine Gegenwart des anderen Verkehrsteilnehmers angibt. Es wird auch vorgeschlagen, bei Erfassung eines Fußgängers schwenkbare Scheinwerfer des Kraftfahrzeugs in horizontaler und/oder vertikaler Richtung zu bewegen, um den Fußgänger anzuvisieren und anzustrahlen.

Den oben genannten Systemen ist gemeinsam, dass diese eine zwischen dem Fußgänger und dem Kraftfahrzeug abgestimmte, spezielle Kommunikationseinrichtung erforderlich machen. Dies ist mit zusätzlichen Kosten und einer erforderlichen Verbreitung der speziellen Kommunikationseinrichtungen im Feld verbunden, was eine allgemeine Praktikabilität der Vorschläge infrage stellt.

Aus dem allgemeinen Stand der Technik ist es auch bekannt, Scheinwerfer als Markierungslicht zum Fußgängerschutz einzusetzen. Hierbei wird mit einer Kamera ein Fußgänger erkannt und über einen Lichtspot markiert bzw. angestrahlt. Problematisch sind hierbei allerdings häufig auftretende Kameraprobleme (z.B. Erkennungsreichweite, Probleme bei Verdeckung und Witterung).

Schließlich ist der die Merkmale vom Oberbegriff des Patentanspruchs 1 bildenden WO 2016/070193 A1 ein Verfahren zu entnehmen, bei dem Informationen über Verkehrsteilnehmer (Fußgänger, Radfahrer, Kraftfahrzeuge) gesammelt, ausgewertet und anderen Verkehrsteilnehmern zur Verfügung gestellt werden. Konkret werden über mobile Endgeräte der Verkehrsteilnehmer deren Orts- und Bewegungsdaten gesammelt. Die gesammelten Daten der Verkehrsteilnehmer werden dahingehend ausgewertet, ob eine Wahrscheinlichkeit einer Kollision gegeben ist. Liegt die ermittelte Wahrscheinlichkeit über einem bestimmten Grenzwert, so wird eine Warnmeldung an die mobilen Endgeräte der betroffenen Verkehrsteilnehmer ausgegeben.

Ausgehend vom Stand der Technik liegt der vorliegenden Erfindung somit die Aufgabe zu Grunde, ein Verfahren zur Ansteuerung wenigstens einer Vorrichtung von einem Kraftfahrzeug zur Verfügung zu stellen, durch welches Verkehrssicherheit für Verkehrsteilnehmer erhöht werden kann.

Vorliegende Aufgabe wird mit den Merkmalen von Patentanspruch 1 gelöst. Vorteilhafte Ausführungen beziehungsweise Weiterbildungen der Erfindung sind den abhängigen Ansprüchen zu entnehmen.

Die Erfindung geht aus von einem Verfahren zur Ansteuerung wenigstens zweier Vorrichtungen von einem Kraftfahrzeug, bei dem die wenigstens zwei Vorrichtungen zumindest in Abhängigkeit von erfassten globalen Positionsdaten wenigstens eines Fußgängers und/oder wenigstens eines Radfahrers angesteuert wird. Die globalen Positionsdaten sind vorzugsweise Daten eines GPS-Systems (GPS = Globales Positionsbestimmungssystem).

Es wird ferner vorgeschlagen, dass die Positionsdaten des wenigstens einen Fußgängers und/oder des wenigstens einen Radfahrers erfasst, an eine entfernt liegende (zentrale) Computereinheit übermittelt und einer Computereinheit des Kraftfahrzeugs zur Verfügung gestellt werden.

Es erfolgt also bei dem Verfahren keine direkte Kommunikation zwischen einem vom Fußgänger oder Radfahrer genutzten Gerät und dem Kraftfahrzeug, sondern erfasste globale Positionsdaten werden zunächst in einer entfernt liegenden Computereinheit (sogenannter Cloudrechner) "zwischengelagert", und aufbereitet bevor sie von einer Computereinheit eines Kraftfahrzeugs abgegriffen beziehungsweise dieser zur Verfügung gestellt werden.

Das Verfahren nutzt somit allgemein zur Verfügung stehende Techniken des Internets und macht eine spezielle Ausrüstung, insbesondere eine Ausrüstung, welche eine Fahrzeug-Fußgänger-Kommunikation ermöglicht, entbehrlich.

Die Erfassung der globalen Positionsdaten eines Fußgängers und/oder eines Radfahrers kann beispielsweise über ein gewöhnliches Internet- und GPS-fähiges Smartphone erfolgen. Es ist aber auch denkbar, dass globale Positionsdaten nicht von Geräten erfasst werden, welche von einem Fußgänger oder Radfahrer mitgeführt werden. Es ist auch eine Erfassung von globalen Positionsdaten eines Fußgängers oder Radfahrers durch Geräte denkbar, welche getrennt von solchen Personen stationär installiert sind. Denkbar ist beispielsweise die Erfassung von Positionsdaten durch geeignete Kameras an Straßenkreuzungen. Derartige Kameras können bei Erkennung von Personen eine signaltechnisch verbundene GPS-Einheit ansteuern, welche ihrerseits ein GPS-Signal der Kameraposition an die entfernt liegende Computereinheit übermittelt.

Gemäß einem Merkmal der Erfindung ist eine der Vorrichtungen eine Anzeigevorrichtung. Gemäß einem Merkmal des erfindungsgemäßen Verfahrens ist eine der Vorrichtungen eine Beleuchtungsvorrichtung. Somit wird auf einfache Weise eine Ansteuerung von Vorrichtungen des Kraftfahrzeugs ermöglicht, die einen Fahrer auf das Vorhandensein von Gefahren hinweisen bzw. mögliche Kollisionsobjekte sichtbar machen können.

Es werden in der entfernt liegenden Computereinheit Positionsdaten von einer Vielzahl von Fußgängern und/oder Radfahrern über einen bestimmten Zeitraum gesammelt. Der Zeitraum kann beispielsweise ein Tag betragen. Es ist auch denkbar, den Zeitraum über ein ganzes Jahr oder länger zu erstrecken. Aus den gesammelten Daten kann dann eine orts- und zeitabhängige Aufenthaltshistorie (Aufenthaltswahrscheinlichkeit) von Fußgängern und/oder Radfahrern gebildet werden.

Der große Vorteil liegt darin, dass man nicht unbedingt auf die Erfassung und Weiterleitung von Positionsdaten eines konkreten Fußgängers oder Radfahrers in Echtzeit angewiesen ist. Vielmehr können die gesammelten Daten nach einem Download durch die Computereinheit des Kraftfahrzeugs dazu genutzt werden, um die wenigstens eine Vorrichtung vom Kraftfahrzeug zumindest mit einer statistisch hohen Wahrscheinlichkeit auch ohne Echtzeiterfassung bedarfsgerecht ansteuern zu können.

So ist gemäß einer Weiterbildung der Erfindung beispielsweise denkbar, dass die gesammelten Positionsdaten zur Ansteuerung eines von einer Beleuchtungsvorrichtung des Kraftfahrzeugs erzeugten Stadtlichtes in der Art genutzt werden, dass das Stadtlicht im Bereich mit statistisch hohem Aufkommen an Fußgängern und/oder Radfahrern eingeschaltet wird. Somit können beispielsweise Geh- und/oder Radwege an bestimmten Orten und zu bestimmten Zeiten durch ein eingeschaltetes Stadtlicht extra beleuchtet werden, um Radfahrer oder Fußgänger früher sichtbar zu machen.

Eine andere Ausbildung des Erfindungsgedankens schlägt vor, dass die gesammelten Positionsdaten zur Ansteuerung eines von einer Beleuchtungsvorrichtung des Kraftfahrzeugs erzeugten Fernlichts in der Art genutzt werden, dass eine Fernlichtverteilung in Bereichen mit statistisch hohem Aufkommen an Fußgängern und/oder Radfahrern nur bis zu einer solchen Höhe reicht, die unter einer vom Fernlicht maximal erreichbaren Höhe einer gewöhnlich erzeugbaren Fernlichtverteilung liegt. Hierdurch kann eine mögliche Blendung dieser Verkehrsteilnehmer zum einen wirksam verhindert werden, zum anderen dennoch deren Erkennbarkeit verbessert werden.

Wenn Positions- und Richtungsdaten eines Fußgängers und/oder eines Radfahrers in Echtzeit erfasst und weitergeleitet werden, so erscheint es zweckmäßig, wenn diese Daten vom Kraftfahrzeug dazu genutzt werden, um eine Stadtlichtverteilung auf diejenige Seite einer Fahrbahn zu richten, auf der sich der Fußgänger oder der Radfahrer auch tatsächlich befindet.

Unter Stadtlicht wird eine derartige Einrichtung moderner Scheinwerfer verstanden, bei der durch eine Verbreiterung und Symmetrieerhöhung des Lichtkegels eine bessere Ausleuchtung von Fuß- beziehungsweise Radwegen erreicht werden kann.

Allerdings kann auch die Situation auftreten, in der bekannt ist, dass die Positionsdaten nur mit einer großen Ungenauigkeit erfasst werden beziehungsweise erfasst werden können. Dies kann beispielsweise anhand eines schlechten oder schwachen GPS-Signals abgeschätzt werden. In einem solchen Fall ist es dann sehr zweckmäßig, wenn das Stadtlicht auf beide Seiten der Fahrbahn gerichtet wird. Ungenaue Positionsdaten können somit zumindest zu einem Teil ausgeglichen werden.

Im Stand der Technik bekannte Lichtassistenten nutzen eine Kamera, um anhand von erkannten Frontscheinwerfern beziehungsweise Heckleuchten anderer Fahrzeuge eingeschaltetes Fernlicht abzublenden und somit eine Blendung der anderen Verkehrsteilnehmer zu vermeiden. Eine solche Vorgehensweise ist bei Fußgängern nicht und bei Radfahrern nur sehr eingeschränkt möglich, da Fußgänger bei Dunkelheit schlecht erkannt werden und die Beleuchtung bei Radfahrern nicht so hell ist wie bei Kraftfahrzeugen. Daher ist es gemäß einer anderen Weiterbildung der Erfindung denkbar, dass die Positionsdaten des wenigstens einen Fußgängers und/oder des wenigstens einen Radfahrers vom Kraftfahrzeug dazu genutzt werden, um eine Fernlichtverteilung vom Fußgänger oder Radfahrer auszublenden.

Um die Qualität der Positionsdaten zu verbessern wird gemäß einer anderen Ausbildung der Erfindung vorgeschlagen, die Positionsdaten über eine Navigationskarte abzugleichen. Bewegt sich beispielsweise ein Objekt in Nähe des Kraftfahrzeugs und auch in gleicher Bewegungsrichtung und werden Positionsdaten außerhalb eines bekannten, rechtsseitigen Geh- oder Fahrradweges angezeigt, so ist eine Korrektur der Position des Objektes auf den Geh- oder Fahrradweg mit großer Wahrscheinlichkeit angebracht.

Ein solcher Abgleich, welcher auch Map-Matching genannt wird, kann durch die zentrale Computereinheit oder auch durch die lokale Computereinheit im Kraftfahrzeug erfolgen.

Gemäß einer anderen Weiterbildung wird schließlich auch noch vorgeschlagen, dass zusätzlich zu den absoluten Positionsdaten auch relative Bewegungsdaten erfasst werden und mit deren Hilfe eine zu erwartende Bewegungstrajektorie des wenigstens einen Fußgängers und/oder des wenigstens einen Radfahrers abgeschätzt wird. Falls sich die Bewegungstrajektorie des Kraftfahrzeugs und diejenige des Fußgängers oder Radfahrers kreuzen, so kann dann eine optische und/oder akustische Warnung durch das Kraftfahrzeug an den Fahrzeugführer und/oder den Fußgänger oder Radfahrer abgegeben werden.

Schließlich soll auch ein Kraftfahrzeug beschrieben werden, mit dem das erfindungsgemäße Verfahren durchführbar ist. Ein derartig hergerichtetes Kraftfahrzeug weist wenigstens eine Beleuchtungsvorrichtung und/oder wenigstens eine Anzeigevorrichtung sowie wenigstens eine im Kraftfahrzeug fest installierte, lokale Computereinheit auf. Ferner ist eine Internetschnittstelle zur Kommunikation der lokalen Computereinheit mit wenigstens einer entfernt liegenden Computereinheit (Cloudrechner) vorhanden. Durch die lokale Computereinheit sind globale Positionsdaten wenigstens eines Fußgängers und/oder wenigstens eines Radfahrers von der entfernt liegenden Computereinheit herunterladbar oder diese werden heruntergeladen. Ferner ist die lokale Computereinheit mit wenigstens einer Steuereinheit zur Ansteuerung der wenigstens einen Beleuchtungsvorrichtung und/oder der wenigstens einen Anzeigevorrichtung vom Kraftfahrzeug verbunden. Dies erfolgt derart, dass die Beleuchtungseinrichtung in Abhängigkeit von heruntergeladenen, globalen Positionsdaten wenigstens eines Fußgängers und/oder wenigstens eines Radfahrers ansteuerbar ist oder angesteuert wird.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

### Es zeigen, jeweils schematisch

- Fig. 1: die Darstellung des Verfahrens in einer ersten Ausführungsform,
- Fig. 2: die Darstellung des Verfahrens in einer zweiten Ausführungsform,
- Fig. 3: die Darstellung eines Kraftfahrzeugs zur Durchführung des Verfahrens,
- Fig. 4: die Darstellung einer Navigationskarte in verschiedenen Modi des Verfahrens,
- Fig. 5: die Darstellung einer Fernlichtverteilung, bei örtlich und zeitlich statistisch hoher Dichte an Fußgängern und/oder Radfahrern,
- Fig. 6: die Darstellung eines maskierten Fernlichts in Zusammenhang mit dem Verfahren,
- Fig. 7: die Darstellung zweiter unterschiedlicher Stadtlichtverteilungen in Abhängigkeit von der Qualität empfangener GPS-Signale und
- Fig. 8: die Ausgabe von Warnungen an den Fahrer und/oder den Fußgänger bei Überschneidung der Bewegungstrajektorien vom Kraftfahrzeug und Fußgänger.

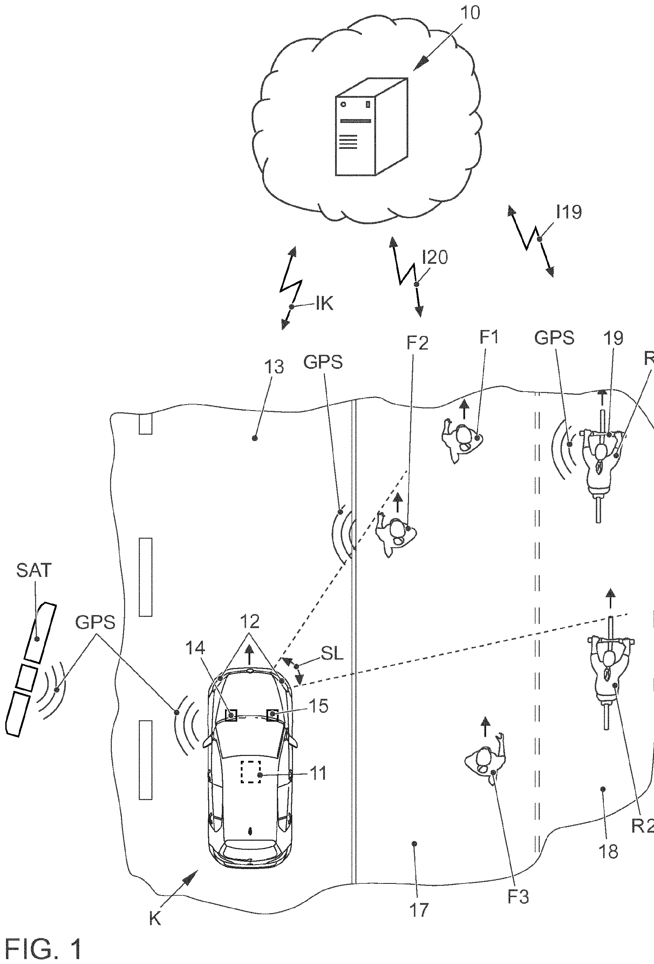

Zunächst wird auf die Fig. 1 Bezug genommen. Auf dieser Figur ist ein Kraftfahrzeug K ersichtlich, welches sich auf einer Fahrbahn 13 in einer Fahrtrichtung (vgl. Pfeil) bewegt. Rechts neben der Fahrbahn 13 sind ein Fußweg 17 und ein Radweg 18 vorhanden.

Auf dem Fußweg 17 laufen Fußgänger F1 bis F3 und auf dem Fahrradweg 18 sind zwei Radfahrer R1 und R2 unterwegs. Die Pfeile zeigen jeweils die Bewegungs- beziehungsweise Fahrtrichtung an.

Das Kraftfahrzeug K weist eine lokale Computereinheit 11 auf sowie eine Internetschnittstelle 15 und eine GPS-Einrichtung 14. Über die Internetschnittstelle 15 ist das Kraftfahrzeug K in der Lage, eine Internetverbindung IK mit einer entfernt befindlichen Computereinheit 10 (Cloudrechner) aufzubauen. Über die GPS-Einrichtung 14 kann das Kraftfahrzeug K GPS-Signale GPS mit mehreren Satelliten SAT (nur einer ist dargestellt) austauschen.

Einer der Fußgänger, nämlich der Fußgänger F2 führt eine GPS-Einrichtung 20 in Form eines handelsüblichen Smartphones mit sich. Ebenso trägt der Radfahrer R1 eine GPS-Einrichtung 19 in Form eines handelsüblichen Smartphones bei sich.

So sind der Fußgänger F2 und der Radfahrer R1 in der Lage, GPS-Signale GPS mit Satelliten SAT auszutauschen und mit der entfernt befindlichen Computereinheit 10 Internetverbindungen I20 beziehungsweise 119 aufzubauen.

Über die Internetverbindungen I19 und I20 senden der Radfahrer R1 und der Fußgänger F2 ständig ihre erfassten, globalen Positionsdaten an die entfernt befindliche Computereinheit 10.

Die Internetverbindung IK dient dazu, dass die erfassten Positionsdaten von der Computereinheit 10 an die lokale Computereinheit 11 des Kraftfahrzeugs K übermittelt und dem Kraftfahrzeug K so zur Verfügung gestellt werden können.

Die Computereinheit 11 wertet die Positionsdaten aus und nutzt diese, um damit eine Beleuchtungsvorrichtung 12 in Form von Scheinwerfern bedarfs- und situationsgerecht anzusteuern.

Im konkreten Fall wird die Beleuchtungsvorrichtung 12 derart angesteuert, dass eine Stadtlichtverteilung SL auf diejenige Seite der Fahrbahn 13 gerichtet wird, wo sich tatsächlich Fußgänger und/oder Radfahrer befinden.

Die Stadtlichtverteilung SL wird also in Richtung des Fußwegs 17 und des Radwegs 18 gerichtet und beleuchtet somit die dort befindlichen Fußgänger und Radfahrer.

Es findet also keine direkte Kommunikation zwischen dem Fußgänger F2 und dem Kraftfahrzeug K oder dem Radfahrer R1 und dem Kraftfahrzeug K statt. Die Kommunikation der Positionsdaten vom Fußgänger F2 beziehungsweise vom Radfahrer R1 läuft somit ausschließlich über die entfernt befindliche Computereinheit 10.

Das Verfahren hat also den Vorteil, dass weder das Kraftfahrzeug K noch der Fußgänger F2, noch der Radfahrer R1 eine spezielle Ausrüstung benötigen, damit deren globale Positionsdaten dem Kraftfahrzeug K zur Verfügung gestellt und das Kraftfahrzeug K seine Beleuchtungsvorrichtung 12 entsprechend ansteuern kann.

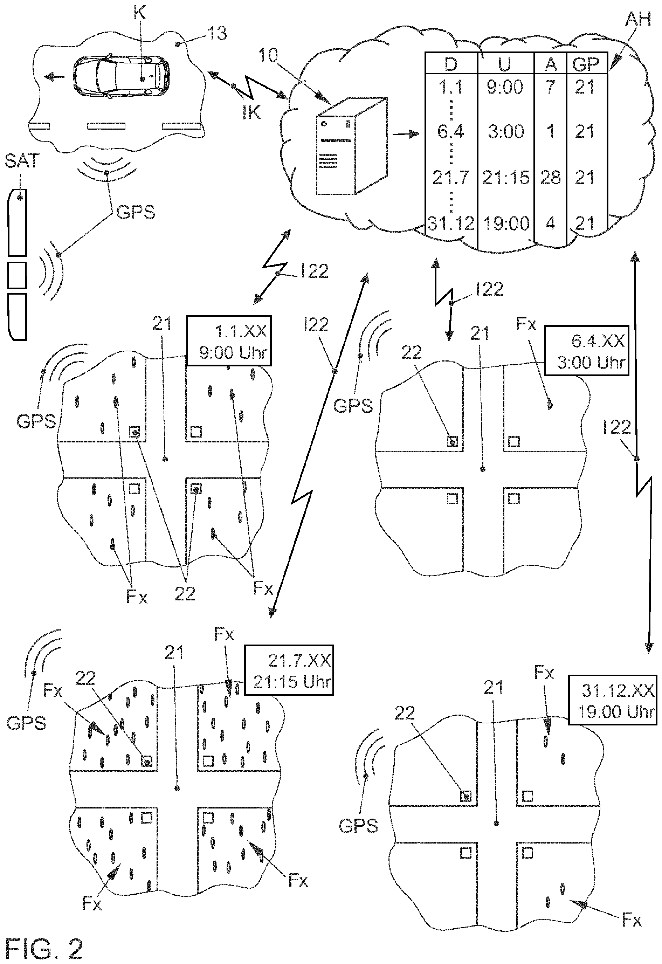

Anhand von Fig. 2 wird nun eine Variante des Verfahrens dargestellt. Im Unterschied zur ersten Variante werden hierbei in der entfernt liegenden Computereinheit 10 von einer Vielzahl von Fußgängern und/oder Radfahrern globale Positionsdaten über einen bestimmten oder zu bestimmenden Zeitraum gesammelt. Aus diesen Daten wird eine orts-und zeitabhängige Aufenthaltshistorie (Aufenthaltswahrscheinlichkeit) errechnet.

So ist eine Straßenkreuzung 21 zu verschiedenen, sich über ein Jahr erstreckenden Zeitpunkten ersichtlich. Im Bereich der Straßenkreuzung 21 sind Kamerasysteme 22 fest installiert, welche eine GPS-Einrichtung aufweisen und mit einer Internetschnittstelle verbunden sind (nicht näher dargestellt).

Über die GPS-Einrichtung können die Kamerasysteme 22 GPS-Daten GPS mit Satelliten SAT austauschen. Über die Internetschnittstelle kann eine Internetverbindung I22 zwischen den Kamerasystemen 22 und der Computereinheit 10 aufgebaut werden.

Werden zu einem bestimmten Zeitpunkt über die Kamerasysteme 22 Fußgänger Fx im Bereich der Straßenkreuzung 21 erfasst, so wird die Anzahl A der erfassten Fußgänger Fx zusammen mit dem Datum D, der Uhrzeit U sowie den globalen Positionsdaten GP der Kamerasysteme 22 und damit in etwa der Straßenkreuzung 21 an die Computereinheit 10 übermittelt. Diese legt in einem geeigneten Speicher diese Daten ab und bildet eine Aufenthaltshistorie AH für den unmittelbaren Umgebungsbereich der Straßenkreuzung 21 ab.

Entsprechend kann an beliebigen anderen Orten beziehungsweise Bereichen verfahren werden. Der Vorteil liegt darin, dass Fußgänger und/oder Fahrradfahrer, welche sich in einem solchen erfassten Bereich wie die Straßenkreuzung 21 befinden, keinerlei zusätzliche Spezialausrüstung benötigen, nicht einmal ein handelsübliches Smartphone.

So wird in der Aufenthaltshistorie AH beispielsweise niedergelegt, dass sich am 01.01.XX, um 9.00 Uhr im Bereich der Straßenkreuzung 21 sieben Fußgänger Fx befanden. Am 06.04.XX, um 3.00 Uhr wurde nur ein Fußgänger erfasst. Dafür hielten sich am 21.07.XX, um 21.15 Uhr im Bereich der Straßenkreuzung 21 achtundzwanzig Fußgänger Fx auf. Am 31.12.XX, um 19.00 Uhr waren es lediglich vier.

Die Aufenthaltshistorie AH kann von der Computereinheit 10 über eine Internetverbindung IK dem Kraftfahrzeug K zur Verfügung gestellt werden. Das Kraftfahrzeug K kann diese Daten dann dazu nutzen, um auf einer geeigneten, kraftfahrzeugeigenen Anzeigeeinheit bei Bedarf eine Kartendarstellung anzuzeigen, in der zeitbezogene Aufenthalts-Wahrscheinlichkeiten von Fußgängern und/oder Radfahrern dargestellt sind (wird an anderer Stelle noch gezeigt).

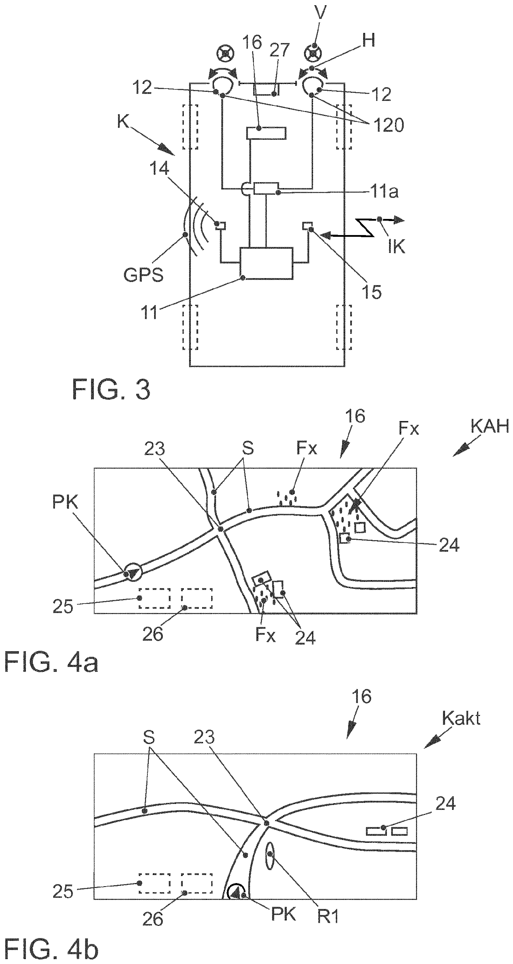

Anhand der Fig. 3 soll nun noch einmal etwas detaillierter das zum erfindungsgemäßen Verfahren hergerichtete Kraftfahrzeug K dargestellt werden.

So ist die lokale Computereinheit 11 signaltechnisch mit der GPS-Einrichtung 14 und mit der Internetschnittstelle 15 verbunden. Über die Internetschnittstelle 15 kann die Internetverbindung IK des Kraftfahrzeugs K zur entfernt befindlichen Computereinheit 10 aufgebaut werden. Die erfassten und der Computereinheit 11 zur Verfügung stehenden Daten werden genutzt, um in einer Steuereinheit 11a entsprechende Steuersignale zur Ansteuerung der Beleuchtungsvorrichtung 12 zu generieren. Die Beleuchtungsvorrichtung 12 besteht aus zwei Scheinwerfern, welche über Schwenkpunkte 120 sowohl in einer Horizontalrichtung H als auch in einer Vertikalrichtung V schwenkbar sind.

Eine Anzeigevorrichtung 16, welche beispielsweise als Display oder bedienbarer Touchscreen ausgebildet sein kann, erlaubt es einem Fahrer, sich bei Bedarf eine Navigationskarte anzeigen zu lassen, die beispielsweise für das von ihm gerade befahrene Gebiet eine Aufenthaltshistorie beziehungsweise eine Aufenthaltswahrscheinlichkeit von Fußgängern und/oder Radfahrern anzeigt. Ferner ist eine akustische Vorrichtung 27 in Form eines Signalhorns vorhanden.

Die genannten Vorrichtungen 12, 16 und 27 sowie die Computereinheit 11, die Steuereinheit 11a und die GPS-Einrichtung 14 sind fest im Kraftfahrzeug K installiert, also Bestandteile des Kraftfahrzeugs K.

So ist anhand der Fig. 4a eine Navigationskarte KAH mit einer Aufenthaltshistorie ersichtlich. Darin wird die aktuelle Position PK des Kraftfahrzeugs K auf Straßen S dargestellt. Das Kraftfahrzeug K bewegt sich auf eine Straßenkreuzung 23 zu. Mit 24 sind Gebäude angedeutet. Des Weiteren sind Fußgänger Fx dargestellt, welche sich zur Fahrzeit des Kraftfahrzeugs K auf Grund der übermittelten Aufenthaltshistorie AH an bestimmten Positionen auf der Navigationskarte KAH (erfahrungsgemäß) befinden.

Mit 25 und 26 werden dem Fahrer Softkeys zur Verfügung gestellt, mit deren Hilfe er auf ein nicht dargestelltes Hauptmenü zurückspringen oder in eine solche Kartendarstellung wechseln kann, wie sie in Fig. 4b dargestellt ist. In dieser Figur ist eine aktuelle Navigationskarte Kakt dargestellt, in welcher aktuell erfasste Radfahrer/Fußgänger ersichtlich sind. Diese werden also konkret und zeitnah gemäß der anfangs dargestellten Verfahrensvariante (Fig. 1) erfasst. Es ist ersichtlich, dass hierbei lediglich ein Radfahrer R1 erfasst wurde. Die Beleuchtungseinrichtung des Kraftfahrzeugs K kann entsprechend angesteuert werden, um den Radfahrer R1 nicht zu blenden und dennoch zu beleuchten.

Die Art der Ansteuerung der Beleuchtungsvorrichtung 12 vom Kraftfahrzeug K wechselt automatisch in Abhängigkeit der vom Fahrzeugführer gewählten Navigationskarte (KAH oder Kakt). So wird bei Anzeige der Navigationskarte KAH die Beleuchtungsvorrichtung 12 auf Basis der Erfahrungswerte pauschal angesteuert. Bei Wahl der Navigationskarte Kakt hingegen erfolgt eine Ansteuerung der Beleuchtungsvorrichtung 12 auf Grund von zeitnah empfangenen Positionsdaten von bewegten Objekten, die tatsächlich im Bereich des Kraftfahrzeugs K vorhanden sind. Es ist auch denkbar, dass die Anzeigevorrichtung 16 in Abhängigkeit von tatsächlich erfassten Fußgängern oder Radfahrern derart angesteuert wird, dass ausgehend von einer beliebigen Anzeige auf der Anzeigevorrichtung 16 in eine Darstellung gemäß Fig. 4b gewechselt wird. Dies kann zusätzlich mit einem akustischen oder optischen Warnsignal verbunden sein.

Wie bereits erwähnt, ist denkbar, dass die gesammelten und in einer Auftragshistorie abgelegten Positionsdaten zur Ansteuerung eines Fernlichts in der Art genutzt werden können, dass das Fernlicht in Bereichen mit statistisch hohem Aufkommen an Fußgängern und/oder Radfahrern nur bis zu einer bestimmten Maximalhöhe strahlt.

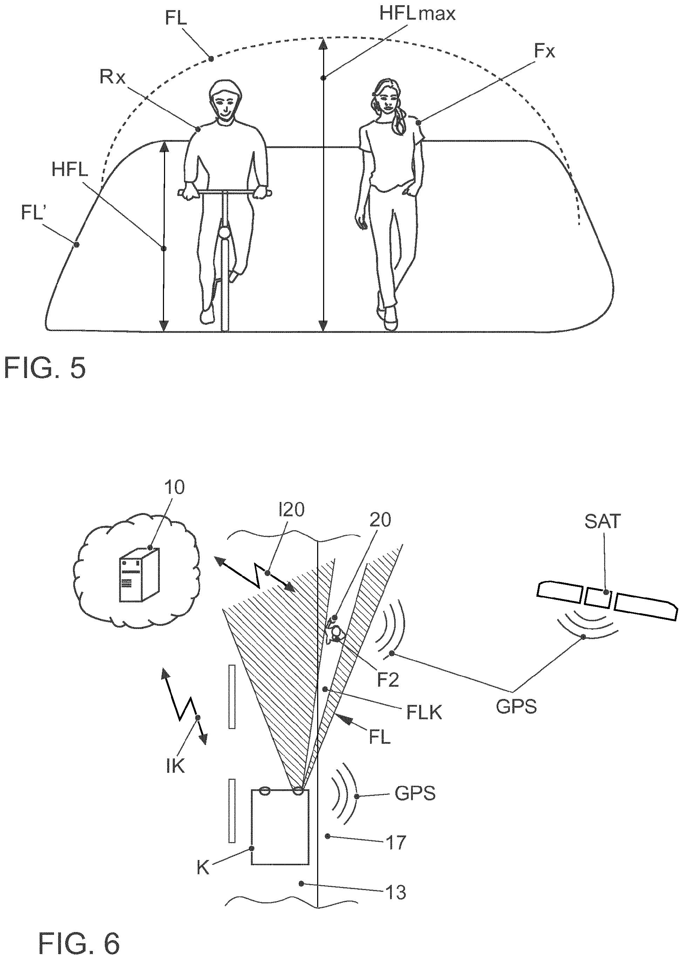

Dies ist in Fig. 5 dargestellt. Hierbei ist eine gewöhnliche Fernlichtverteilung FL gestrichelt angedeutet, wie sie unter normalen Bedingungen mit wenig Blendungsgefahr (z.B. auf Landstraßen) erzeugbar ist oder erzeugt wird. Mit FL' ist eine solche Fernlichtverteilung beziffert, wie sie in Gebieten mit statistisch hohem Aufkommen an Fußgängern Fx oder Radfahrern Rx erzeugbar ist oder erzeugt wird. Es ist ersichtlich, dass die Fernlichtverteilung FL eine Maximalhöhe HFLmax aufweist, welche deutlich über den Köpfen der Radfahrer Rx beziehungsweise Fx liegt, diese also blenden kann. Eine Höhe HFL der Fernlichtverteilung FL' hingegen liegt unterhalb der Köpfe der Radfahrer Rx beziehungsweise Fußgänger Fx. Die Gefahr einer Blendung kann somit vermieden werden.

Die Fig. 6 zeigt eine Ausbildung des Verfahrens, bei dem ein Fußgänger F2 wiederum mit einer GPS-Einrichtung 20 in Form eines Smartphones ausgestattet ist. Hierdurch können zeitnah über GPS-Signale GPS globale Positionsdaten des Fußgängers F2 erfasst und über die Internetverbindung I20 des Smartphones an die entfernt liegende Computereinheit 10 übermittelt werden. Über eine Internetverbindung IK können die globalen Positionsdaten des Fußgängers F2 dem Kraftfahrzeug K wieder zur Verfügung gestellt werden. Das Kraftfahrzeug K steuert daraufhin seine Beleuchtungsvorrichtung 12 derart an, dass bei einer Fernlichtverteilung FL ein lichtfreier Fernlichtkorridor FLK für den Fußgänger F2 erzeugt wird. Die Fernlichtverteilung FL wird somit im Bereich des Fußgängers F2 ausgeblendet.

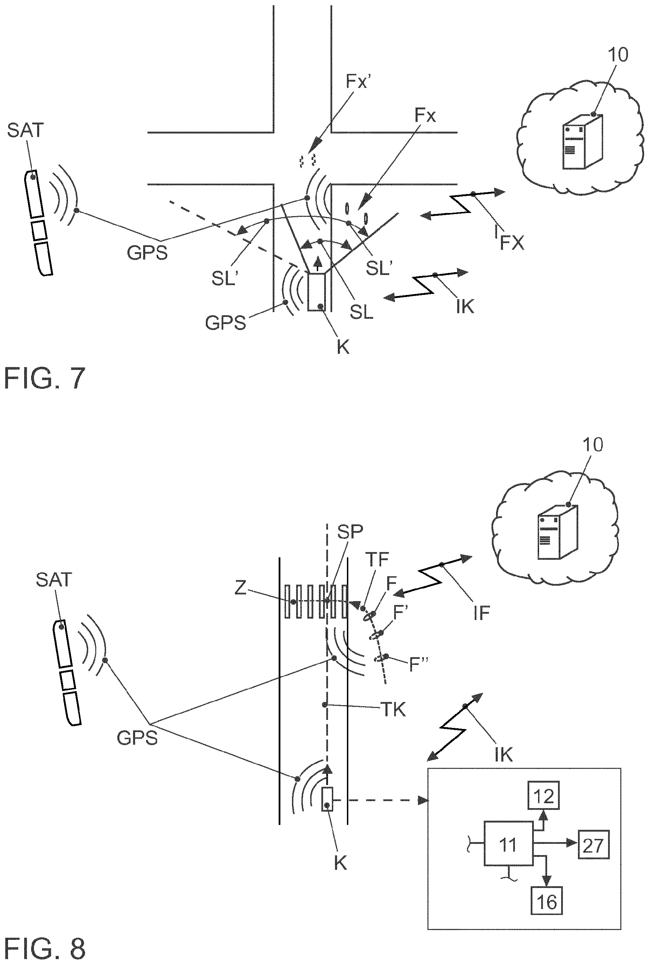

Anhand der Fig. 7 ist dargestellt, wie auch eine Stadtlichtverteilung SL in Abhängigkeit von konkret vorhandenen Fußgängern variiert werden kann. So führen die Fußgänger Fx wiederum nicht näher dargestellte Smartphones mit sich, so dass deren globale Positionen erfasst und diese über eine Internetverbindung IFX einer Computereinheit 10 übermittelt werden können. Die globalen Positionsdaten der Fußgänger Fx können wiederum über eine Internetverbindung IK von der Computereinheit 10 dem Kraftfahrzeug K zur Verfügung gestellt werden. Da die Positionsdaten dem Kraftfahrzeug K anzeigen, dass sich die Fußgänger Fx auf der rechten Seite der Fahrbahn befinden, wird die Stadtlichtverteilung SL auf die rechte Seite der Fahrbahn gerichtet.

Allerdings kann es auch vorkommen, dass erkannt wird, dass die gelieferten Positionsdaten der Fußgänger Fx eine schlechte Qualität aufweisen. Dies soll mit Fx' angedeutet werden. In einem solchen Fall ist es zweckmäßig, wenn eine solche Stadtlichtverteilung SL' erzeugt wird, welche auf beide Seiten der Fahrbahn gerichtet ist. Somit kann man sichergehen, dass die Fußgänger Fx im Bereich des Kraftfahrzeugs K trotz schlechter Qualität der GPS-Signale GPS mit hoher Wahrscheinlichkeit beleuchtet werden.

Schließlich wird anhand von Fig. 8 ein Aspekt des Verfahrens dargestellt, bei dem ein Fußgänger F wiederum ein nicht näher dargestelltes Smartphone mit sich führt und über eine Internetverbindung IF sowohl globale Positions- als auch Bewegungsdaten des Fußgängers F an die entfernt liegende Computereinheit 10 übermittelt werden. Mit den Bezugszeichen F' und F" sind Positionen des Fußgängers F angedeutet, die er kurz zuvor innehatte. Die Positions- beziehungsweise Bewegungsdaten des Fußgängers F werden dem Kraftfahrzeug K wiederum über eine Internetverbindung IK zur Verfügung gestellt. Aus diesen Daten schätzt die Computereinheit 11 mittels einer geeigneten Logik eine Bewegungstrajektorie TF des Fußgängers ab, welche im vorliegenden Fall über einen Fußgängerüberweg Z verläuft. Gleichermaßen ist der Computereinheit 11 eine Bewegungstrajektorie TK des Kraftfahrzeugs K bekannt. Hieraus kann berechnet werden, ob ein Schnittpunkt SP zwischen den Bewegungstrajektorien TF und TK auftritt und somit eine Kollisionsgefahr gegeben ist.

In einem solchen Fall können über die Computereinheit 11 die Beleuchtungsvorrichtung 12, die als Signalhorn ausgebildete, akustische Vorrichtung 27 (vergleiche Fig. 3) und die Anzeigevorrichtung 16 derart angesteuert werden, dass eine optische und/oder akustische Warnung sowohl an den Fußgänger F als auch an den Fahrer des Kraftfahrzeugs K ergeht. Die Warnung kann auch als Text- und/oder Sprachausgabe abgegeben werden. Es ist auch denkbar, dass eine zusätzlich im Innenraum des Kraftfahrzeugs K befindliche, akustische Vorrichtung (bspw. Lautsprecher) derart angesteuert wird, dass (auch) über diese eine akustische Warnung erfolgt.

## Patentansprüche

1. Verfahren zur Ansteuerung wenigstens zweier Vorrichtungen (12, 16, 27) von einem Kraftfahrzeug (K), umfassend eine Anzeigevorrichtung (16) und eine Beleuchtungsvorrichtung (12), bei dem die wenigstens zwei Vorrichtungen (12, 16, 27) zumindest in Abhängigkeit von erfassten globalen Positionsdaten (GP, GP21) wenigstens eines Fußgängers (F, F1, F2, F3, Fx) und/oder wenigstens eines Radfahrers (R1, R2, Rx) angesteuert werden,
wobei die Positionsdaten (GP, GP21) des wenigstens einen Fußgängers (F, F1, F2, F3, Fx) und/oder des wenigstens einen Radfahrers (R1, R2, Rx) erfasst, an eine entfernt befindliche Computereinheit (10) übermittelt und einer Computereinheit (11) des Kraftfahrzeugs (K) zur Verfügung gestellt werden, wobei in der entfernt liegenden Computereinheit (10) Positionsdaten (GP) von einer Vielzahl von Fußgängern (Fx) und/oder Radfahrern (Rx) gesammelt werden und aus diesen Daten eine orts- und zeitabhängige Aufenthaltshistorie (AH) von Fußgängern (Fx) und/oder Radfahrern (Rx) gebildet wird, **dadurch gekennzeichnet, dass** durch die Anzeigevorrichtung (16) des Kraftfahrzeugs (K) eine Navigationskarte (KAH) angezeigt wird, die für das gerade befahrene Gebiet eine Aufenthaltshistorie (AH) von Fußgängern und/oder Radfahrern anzeigt,
und wobei die Art der Ansteuerung der Beleuchtungsvorrichtung (12) vom Kraftfahrzeug (K) automatisch in Abhängigkeit der vom Fahrzeugführer gewählten Navigationskarte wechselt, in der Art, dass bei einer Anzeige der die Aufenthaltshistorie (AH) von Fußgängern (Fx) und/oder Radfahrern (Rx) anzeigenden Navigationskarte (KAH) die Beleuchtungsvorrichtung (12) auf Basis der durch die übermittelte Aufenthaltshistorie (AH) gebildeten Erfahrungswerte angesteuert wird und bei Wahl einer aktuellen Navigationskarte (Kakt), in welcher aktuell erfasste Radfahrer und/oder Fußgänger ersichtlich sind, eine Ansteuerung der Beleuchtungsvorrichtung (12) auf Grund von zeitnah empfangenen Positionsdaten von bewegten Objekten erfolgt, die tatsächlich im Bereich des Kraftfahrzeugs (K) vorhanden sind.

2. Verfahren nach Anspruch 1, dadurch gelennzeichnet, dass die Anzeigevorrichtung (16) in Abhängigkeit von tatsächlich erfassten Fußgängern oder Radfahrern derart angesteuert wird, dass ausgehend von einer beliebigen Anzeige auf der Anzeigevorrichtung (16) in eine Darstellung gemäß der aktuellen Navigationskarte (Kakt) gewechselt wird.

3. Verfahren nach einem der vorhergehenden Ansprüche, **dadurch gekennzeichnet, dass** die gesammelten Positionsdaten (GP) zur Ansteuerung eines Stadtlichtes in der Art genutzt werden, dass das Stadtlicht in Bereichen mit statistisch hohem Aufkommen an Fußgängern (Fx) und/oder Radfahrern (Rx) eingeschaltet wird.

4. Verfahren nach einem der vorhergehenden Ansprüche, **dadurch gekennzeichnet, dass** die gesammelten Positionsdaten (GP) zur Ansteuerung eines Fernlichts in der Art genutzt werden, dass eine erzeugte Fernlichtverteilung (FL`) in Bereichen mit statistisch hohem Aufkommen an Fußgängern (Fx) und/oder Radfahrern (Rx) nur bis zu einer solchen Höhe (HFL) reicht, die unter einer vom Fernlicht maximal erreichbaren Höhe (HFLmax) einer gewöhnlich erzeugbaren Fernlichtverteilung (FL) liegt.

5. Verfahren nach Anspruch einem der vorhergehenden Ansprüche, **dadurch gekennzeichnet, dass** Positions- und Bewegungsdaten (GP) des wenigstens einen Fußgängers (F, F2) und/oder des wenigstens eines Radfahrers (R1) vom Kraftfahrzeug (K) dazu genutzt werden, um eine Stadtlichtverteilung (SL) auf diejenige Seite einer Fahrbahn (13) zu richten, auf der sich der Fußgänger (F, F2) oder der Radfahrer (R1) befindet.

6. Verfahren nach Anspruch 5, **dadurch gekennzeichnet, dass** die Stadtlichtverteilung (SL') auf beide Seiten der Fahrbahn (13) gerichtet wird, wenn erkannt wird, dass die Positionsdaten (GP) auf einem schlechten oder schwachen GPS-Signal (GPS) beruhen.

7. Verfahren nach Anspruch 5 oder 6, **dadurch gekennzeichnet, dass** die Positionsdaten (GP) des wenigstens einen Fußgängers (F, F2) und/oder des wenigstens eines Radfahrers (R1) vom Kraftfahrzeug (K) dazu genutzt werden, um eine Fernlichtverteilung (FL) vom Fußgänger (F, F2) oder Radfahrer (R1) auszublenden.

8. Verfahren nach einem der vorhergehenden Ansprüche 5 bis 7, **dadurch gekennzeichnet, dass** die Positionsdaten (GP) über eine Navigationskarte abgeglichen werden.

9. Verfahren nach einem der vorhergehenden Ansprüche 5 bis 8, **dadurch gekennzeichnet, dass** zusätzlich zu den Positionsdaten (GP) auch Bewegungsdaten erfasst werden und mit deren Hilfe eine zu erwartende Bewegungstrajektorie (TF) des wenigstens einen Fußgängers (F) und/oder des wenigstens eines Radfahrers (R1) abgeschätzt wird und eine Warnmeldung an den Fahrzeugführer und den wenigstens einen Fußgänger (F) oder Radfahrer (R1) ausgegeben wird, wenn zu erwarten ist, dass sich die Bewegungstrajektorie (TF) des wenigstens einen Fußgängers (F) und/oder Radfahrers (R1) mit einer Bewegungstrajektorie (TK) des Kraftfahrzeugs (K) schneidet.

## Claims

1. Method for actuating at least two devices (12, 16, 27) of a motor vehicle (K), comprising a display device (16) and a lighting device (12), in which the at least two devices (12, 16, 27) are actuated at least on the basis of acquired global position data (GP, GP21) in relation to at least one pedestrian (F, F1, F2, F3, Fx) and/or at least one cyclist (R1, R2, Rx),
wherein the position data (GP, GP21) in relation to the at least one pedestrian (F, F1, F2, F3, Fx) and/or the at least one cyclist (R1, R2, Rx) are acquired, transmitted to a remote computer unit (10) and made available to a computer unit (11) of the motor vehicle (K), wherein position data (GP) from a multiplicity of pedestrians (Fx) and/or cyclists (Rx) are collected in the remote computer unit (10), and a location-dependent and time-dependent history of presence (AH) of pedestrians (Fx) and/or cyclists (Rx) is formed from these data, **characterized in that** a navigation map (KAH) is displayed by the display device (16) of the motor vehicle (K), said navigation map displaying a history of presence (AH) of pedestrians and/or cyclists for the area currently being driven through,
and wherein the way in which the lighting device (12) of the motor vehicle (K) is actuated changes automatically depending on the navigation map selected by the vehicle driver in such a way that, when the navigation map (KAH) displaying the history of presence (AH) of pedestrians (Fx) and/or cyclists (Rx) is displayed, the lighting device (12) is actuated on the basis of the empirical values formed by the transmitted history of presence (AH),
and, when an up-to-date navigation map (Kakt) in which currently detected cyclists and/or pedestrians are visible is selected, the lighting device (12) is actuated on the basis of promptly received position data from moving objects that are actually present in the region of the motor vehicle (K).

2. Method according to Claim 1, **characterized in that** the display device (16) is actuated on the basis of actually detected pedestrians or cyclists such that a switch is performed from any display on the display device (16) to a display in accordance with the up-to-date navigation map (Kakt).

3. Method according to either of the preceding claims, **characterized in that** the collected position data (GP) are used to actuate a town light in such a way that the town light is switched on in areas with a statistically high occurrence of pedestrians (Fx) and/or cyclists (Rx).

4. Method according to one of the preceding claims, **characterized in that** the collected position data (GP) are used to actuate a high beam in such a way that a generated high-beam distribution (FL'), in areas with a statistically high occurrence of pedestrians (Fx) and/or cyclists (Rx), only reaches a level (HFL) that is below a maximum level (HFLmax), able to be achieved by the high beam, of a high-beam distribution (FL) normally able to be produced.

5. Method according to one of the preceding claims, **characterized in that** position and motion data (GP) in relation to the at least one pedestrian (F, F2) and/or the at least one cyclist (R1) are used by the motor vehicle (K) to direct a town light distribution (SL) onto that side of the road (13) on which the pedestrian (F, F2) or the cyclist (R1) is located.

6. Method according to Claim 5, **characterized in that** the town light distribution (SL') is directed onto both sides of the road (13) when it is identified that the position data (GP) are based on a poor or weak GPS signal (GPS) .

7. Method according to Claim 5 or 6, **characterized in that** the position data (GP) in relation to the at least one pedestrian (F, F2) and/or the at least one cyclist (R1) are used by the motor vehicle (K) to mask a high-beam distribution (FL) from the pedestrian (F, F2) or cyclist (R1).

8. Method according to one of preceding Claims 5 to 7, **characterized in that** the position data (GP) are compared using a navigation map.

9. Method according to one of preceding Claims 5 to 8, **characterized in that** motion data are also acquired in addition to the position data (GP) and are used to estimate an expected motion trajectory (TF) of the at least one pedestrian (F) and/or of the at least one cyclist (R1), and a warning message is output to the vehicle driver and the at least one pedestrian (F) or cyclist (R1) if it is expected that the motion trajectory (TF) of the at least one pedestrian (F) and/or cyclist (R1) will intersect a motion trajectory (TK) of the motor vehicle (K).

## Revendications

1. Procédé de commande d'au moins deux dispositifs (12, 16, 27) d'un véhicule automobile (K) comprenant un dispositif d'affichage (16) et un dispositif d'éclairage (12), procédé dans lequel les au moins deux dispositifs (12, 16, 27) sont commandés au moins en fonction de données de position globale acquises (GP, GP21) d'au moins un piéton (F, F1, F2, F3, Fx) et/ou d'au moins un cycliste (R1, R2, Rx),
les données de position (GP, GP21) de l'au moins un piéton (F, F1, F2, F3, Fx) et/ou de l'au moins un cycliste (R1, R2, Rx) sont acquises et transmises à une unité informatique distante (10) et mises à disposition d'une unité informatique (11) du véhicule automobile (K), des données de position (GP) provenant d'un grand nombre de piétons (Fx) et/ou de cyclistes (Rx) étant collectées dans l'unité informatique distante (10) et un historique de séjour (AH), en termes de lieu et de temps, de piétons (Fx) et/ou de cyclistes (Rx) étant formé à partir de ces données, **caractérisé en ce que** le dispositif d'affichage (16) du véhicule automobile (K) affiche une carte de navigation (KAH) qui présente un historique de séjour (AH) de piétons et/ou de cyclistes pour la zone actuellement parcourue,
et le type de commande du dispositif d'éclairage (12) du véhicule automobile (K) changeant automatiquement en fonction de la carte de navigation sélectionnée par le conducteur du véhicule de manière à ce que, lorsqu'une carte de navigation (KAH) présentant l'historique de séjour (AH) de piétons (Fx) et/ou de cyclistes (Rx) est affichée, le dispositif d'éclairage (12) soit commandé sur la base des valeurs empiriques formées par l'historique de séjour transmis (AH) et, lorsqu'une carte de navigation actuelle (Kakt) visualisant des cyclistes et/ou des piétons actuellement détectés est sélectionnée, une commande du dispositif d'éclairage (12) soit effectuée sur la base de données de position reçues en temps opportun d'objets en mouvement qui sont réellement présents dans la zone du véhicule automobile (K) .

2. Procédé selon la revendication 1, **caractérisé en ce que** le dispositif d'affichage (16) est commandé en fonction de piétons ou de cyclistes effectivement détectés de manière à ce que, à partir de tout affichage sur le dispositif d'affichage (16), une représentation selon la carte de navigation actuelle (Kakt) est modifiée.

3. Procédé selon l'une des revendications précédentes, **caractérisé en ce que** les données de position collectées (GP) sont utilisées pour commander un éclairage urbain de manière à ce que l'éclairage urbain soit activé dans des zones présentant un nombre statistiquement élevé de piétons (Fx) et/ou cyclistes (Rx) .

4. Procédé selon l'une des revendications précédentes, **caractérisé en ce que** les données de position collectées (GP) sont utilisées pour commander un feu de route de manière à qu'une répartition de feux de route (FL) générée atteigne dans des zones présentant un nombre statistiquement élevé de piétons (Fx) et/ou de cyclistes (Rx) une hauteur (HFL) située au-dessous d'une hauteur maximale (HFLmax) pouvant être atteinte par les feux de route d'une distribution de feux de route (FL) générée normalement.

5. Procédé selon l'une des revendications précédentes, **caractérisé en ce que** des données de position et de déplacement (GP) de l'au moins un piéton (F, F2) et/ou de l'au moins un cycliste (R1) sont utilisées par le véhicule automobile (K) pour diriger une distribution d'éclairage urbain (SL) du côté d'une chaussée (13) où se trouve le piéton (F, F2) ou le cycliste (R1).

6. Procédé selon la revendication 5, **caractérisé en ce que** la distribution d'éclairage urbain (SL) est dirigée des deux côtés de la chaussée (13) lorsqu'il est détecté que les données de position (GP) sont basées sur un signal GPS (GPS) médiocre ou faible.

7. Procédé selon la revendication 5 ou 6, **caractérisé en ce que** les données de position (GP) de l'au moins un piéton (F, F2) et/ou de l'au moins un cycliste (R1) sont utilisées par le véhicule automobile (K) pour supprimer une distribution de feux de route (FL) de piétons (F, F2) ou de cyclistes (R1).

8. Procédé selon l'une des revendications précédentes 5 à 7, **caractérisé en ce que** les données de position (GP) sont ajustées par le biais d'une carte de navigation.

9. Procédé selon l'une des revendications précédentes 5 à 8, **caractérisé en ce que**, en plus des données de position (GP), des données de déplacement sont également acquises et une trajectoire de déplacement attendue (TF) de l'au moins un piéton (F) et/ou de l'au moins un cycliste (R1) est estimée à l'aide de celles-ci et un message d'avertissement est délivré au conducteur du véhicule et à l'au moins un piéton (F) ou cycliste (R1) s'il faut s'attendre à ce que la trajectoire de déplacement (TF) de l'au moins un piéton (F) et/ou cycliste (R1) croise une trajectoire de déplacement (TK) du véhicule automobile (K).
